# EUROPEAN PATENT APPLICATION

(11) **EP 4 335 822 A1**
(43) Date of publication of application: **13.03.2024**
(21) Application number: 22798885.4
(22) Date of filing: 25.04.2022
(51) Int. Cl.: C01G 33/00, C08F 8/00, C08F 292/00, C09C 3/08, C08L 101/14, B82Y 30/00, B82Y 40/00, C08F 2/44, C08K 3/013

(54) **METHOD FOR MANUFACTURING MODIFIED INORGANIC NANOSHEET, AND MODIFIED INORGANIC NANOSHEET**

(30) Priority: 06.05.2021 JP 2021078716
(71) Applicant: Fukuoka Institute Of Technology, Fukuoka-shi, Fukuoka 811-0295 (JP)
(72) Inventor: MIYAMOTO Nobuyoshi, Fukuoka-shi, Fukuoka 811-0295 (JP); TANAKA Kazuki, Fukuoka-shi, Fukuoka 811-0295 (JP)
(74) Representative: Hoffmann Eitle
(86) International application number: PCT/JP2022/018673
(87) International publication number: WO 2022/234779

(57) **Abstract**

Provided are a method for producing a modification inorganic nanosheet, the method capable of modifying each of inorganic nanosheets that are substantially completely peeled, and the modification inorganic nanosheet. The method for producing a modification inorganic nanosheet includes: a degradable gel generation step of polymerizing a monomer using a polymerization initiator in an inorganic nanosheet dispersion liquid containing an inorganic nanosheet and water to generate a degradable gel from the monomer; a modification step of adding a modifier to the degradable gel and modifying the inorganic nanosheet with the modifier; and a gel removal step of removing the degradable gel.

## Description

### Technical Field

The present invention relates to a method for producing a modification inorganic nanosheet and the modification inorganic nanosheet. In particular, the present invention relates to a method for producing a modification inorganic nanosheet using a degradable gel, and the modification inorganic nanosheet.

### Background Art

Inorganic nanosheets have various functions and have an extremely large specific surface area, and therefore are widely applied to adsorption, separation, catalysts, sensors, and the like. In addition, various studies have been performed from the viewpoint of combination with a polymer to significantly improve the heat resistance, mechanical strength, gas barrier properties, and the like of the composite material. Furthermore, a colloidal dispersion system exhibits liquid crystallinity, and thus application as a smart colloidal material that can be used for optical elements or the like has also been studied. In the case of synthesizing a composite with a polymer, the inorganic nanosheet is hydrophilic while many industrially used organic polymers are hydrophobic, and thus only mixing both the inorganic nanosheet and the organic polymer fails to form a composite material. To achieve the combination of the hydrophilic inorganic nanosheet and the hydrophobic organic polymer, it is required to disperse the inorganic nanosheets in an organic solvent without aggregation. Therefore, it is necessary to enhance affinity with an organic solvent by performing surface modification for an inorganic nanosheet surface using an organic compound or the like. In addition, in order to be applied as an adsorption/separation material or the like, it is necessary to perform surface modification according to the use for the purpose of suppressing a decrease in specific surface area due to aggregation of inorganic nanosheets and adjusting adsorption characteristics of target molecules or the like. In order to be applied as a smart colloidal material, it is necessary to be dispersed and functionalized in a desired solvent according to the use. For example, it has been reported that a liquid crystal phase of an inorganic nanosheet is developed in chloroform with a silylated inorganic nanosheet dispersed in chloroform (refer to, for example, Non Patent Literature 1).

### Citation List

### Non Patent Literature

Non Patent Literature 1: Nakato, T.; Hashimoto, S., Chem.Lett.2007, 36, 1240-1241

### Summary of Invention

### Technical Problem

However, in the technique described in Non Patent Literature 1 and the conventional method for modifying an inorganic nanosheet, an inorganic layered compound is intercalated with an organic ammonium salt or the like to expand a layer-to-layer space and then a modifier is introduced into this layer-to-layer space for modification to peel off the inorganic nanosheet. Therefore, there have been pointed out such problems that the type of a modifier that can be used is limited to a compound that can be introduced into the layer-to-layer space, the inorganic nanosheet surface cannot be uniformly modified with the modifier, and the modification rate of the modifier is low. In addition, there has been pointed out such a problem that it is difficult to perform single layer peel for the layered material after modification, and although a laminate of several layers to several tens of layers can be obtained, it is impossible to recover the modification inorganic nanosheet in a state of the single layer peel, or the recovery rate is extremely low.

Therefore, an object of the present invention is to provide a method for producing a modification inorganic nanosheet, the method capable of modifying each of substantially completely peeled inorganic nanosheets, and the modification inorganic nanosheet.

### Solution to Problem

To achieve the above object, the present invention provides a method for producing a modification inorganic nanosheet, the method including: a degradable gel generation step of polymerizing a monomer using a polymerization initiator in an inorganic nanosheet dispersion liquid containing an inorganic nanosheet and water to generate a degradable gel from the monomer; a modification step of adding a modifier to the degradable gel and modifying the inorganic nanosheet with the modifier; and a gel removal step of removing the degradable gel.

In the method for producing a modification inorganic nanosheet, preferably the inorganic nanosheet dispersion liquid is formed by containing an inorganic nanosheet that is substantially completely peeled. Preferably the inorganic nanosheet has, on the surface or the peripheral portion, a hydroxyl group that is modifiable.

In addition, to achieve the above object, the present invention provides a structure including a degradable gel that contains an inorganic nanosheet substantially in a completely peeled state and maintains a completely peeled state of the inorganic nanosheet. Furthermore, to achieve the above object, the present invention provides a modification inorganic nanosheet that is an inorganic nanosheet that is substantially completely peeled and in which the surface of the inorganic nanosheet is modified with a modifier. In addition, there may be provided a structure including a degradable gel, the degradable gel containing an inorganic nanosheet substantially in a completely peeled state and a modifier, and fixing the completely peeled state of the inorganic nanosheet modified with the modifier.

### Advantageous Effects of Invention

The method for producing a modification inorganic nanosheet and the modification inorganic nanosheet according to the present invention can provide a method for producing a modification inorganic nanosheet, the method capable of modifying each of substantially completely peeled inorganic nanosheets, and the modification inorganic nanosheet.

### Brief Description of Drawings

Fig. 1 is an observation view of an inorganic nanosheet-pDMAA degradable gel after solvent substitution.
Fig. 2 is a cross-nicol observation view of a comparative sample and a sample according to Example.
Fig. 3 is an observation view of an inorganic nanosheet-pAA degradable gel after solvent substitution.
Fig. 4 is a cross-nicol observation view of a comparative sample and a sample according to Example.

### Description of Embodiment

### [Embodiment]

### <Outline of modification inorganic nanosheet and method for producing the same>

The present inventor has conceived the present invention in the process of performing studies from both basic and application aspects while putting emphasis on the chemistry of inorganic layered materials and linking with a wide range of fields such as polymer synthesis and soft matter physics. That is, the present inventor has conceived that to form a composite material of an inorganic nanosheet and a polymer material, a completely peeled state of the inorganic nanosheet is once formed, the completely peeled state is fixed by some method, and then a modifier can act thereon, whereby the surface of each of the inorganic nanosheets in the completely peeled state can be modified with the modifier. In addition, the present inventor has found that the inorganic nanosheet can be substantially in a completely peeled state in water, forming a predetermined gel can fix the state in the gel, and fine particles and molecules having a particle diameter smaller than that of the inorganic nanosheet are likely to diffuse in the gel, and has conceived the present invention.

Specifically, the method for producing a modification inorganic nanosheet according to an embodiment of the present invention is a production method including completely peeling an inorganic nanosheet in, for example, water, fixing the inorganic nanosheet in the completely peeled state with a predetermined gel (that is, polymer network), and modifying (for example, silylation) the fixed inorganic nanosheet in the gel. The size of the inorganic nanosheet in the lateral direction (several hundreds nm to several tens µm) is larger than the network size of the polymer network (several nm to several tens nm), and thus once the inorganic nanosheet is fixed, aggregation can be suppressed and a completely peeled state can be maintained. After the modification, the gel can be removed by decomposition or the like. The method for producing a modification inorganic nanosheet according to the present embodiment can synthesize a modification inorganic nanosheet in which each of the substantially completely peeled inorganic nanosheets is modified.

As described above, the inorganic nanosheet in a state of being completely peeled is fixed by the gel and the inorganic nanosheet is modified by being added with a modifier, and thus the type of the inorganic nanosheet to be used is not limited as long as a hydroxyl group is present on the surface or a peripheral portion of the inorganic nanosheet. In addition, the type of the modifier added to the gel is not limited as long as the modifier reacts with the hydroxyl group of the inorganic nanosheet. Therefore, not only each of the inorganic nanosheets can be modified with a modifier, but also various inorganic nanosheets can be modified with various modifiers, so that the composite material can be precisely designed.

Hereinafter, the method for producing a modification inorganic nanosheet and the modification inorganic nanosheet according to the present embodiment are described in detail.

### <Details of method for producing modification inorganic nanosheet and modification inorganic nanosheet>

The modification inorganic nanosheet according to the present embodiment is obtained through the following steps, generally. That is, first, there is prepared an inorganic nanosheet dispersion liquid containing an inorganic nanosheet, water or a solvent (mixed solvent of dimethylformamide or the like/water) capable of maintaining a completely peeled state of the inorganic nanosheet, and a peeling agent (tetrabutylammonium or the like, if necessary) (inorganic nanosheet dispersion liquid preparation step). Subsequently, into this dispersion liquid, a monomer, a crosslinking agent, and/or a polymerization initiator are introduced to cause a polymerization reaction. Thereby, a predetermined gel is formed, and the inorganic nanosheet is fixed in the gel (degradable gel generation step). Furthermore, to the obtained gel, a predetermined solvent is added to perform solvent substitution (solvent substitution step). Then, the gel after solvent substitution is placed in a predetermined solvent, and a modifier is added thereto, so that the inorganic nanosheet in the gel is modified with the modifier (modification step). Thereafter, the gel is removed, and the modified inorganic nanosheet is recovered (gel removal step).

That is, in the method for producing a modification inorganic nanosheet according to the present embodiment, the inorganic nanosheet is substantially completely peeled in the inorganic nanosheet dispersion liquid. To the inorganic nanosheet dispersion liquid in this state, a monomer, a crosslinking agent, and/or a polymerization initiator are added to promote polymerization of the monomer, so that a gel is generated. As a result, the peeled state of the inorganic nanosheet is fixed by the generated gel. To this gel, a modifier is added, so that each of the completely peeled inorganic nanosheets is modified with the modifier. Thereafter, the gel is decomposed and removed to obtain a modification inorganic nanosheet in which each of the completely peeled inorganic nanosheets (that is, with a single layer peeled) is modified with a modifier. Hereinafter, each step is described in detail.

### [Inorganic nanosheet dispersion liquid preparation step]

The inorganic nanosheet dispersion liquid preparation step is a step of adding an inorganic nanosheet to a solvent to prepare an inorganic nanosheet dispersion liquid containing the substantially completely peeled inorganic nanosheet.

### (Inorganic nanosheet)

The inorganic nanosheet according to the present embodiment is a thin sheet-shaped inorganic crystal constituting an inorganic material constituting a laminated structure or a layered structure. As the inorganic nanosheet, either an inorganic nanosheet obtained by peeling an inorganic layered compound or an inorganic nanosheet synthesized using a predetermined compound can be used.

For example, when an inorganic nanosheet is obtained by peeling an inorganic layered compound, first, the inorganic layered compound is added to a predetermined solvent or an aqueous solution containing a predetermined salt (for example, ammonium salts). Then, the solvent enters the layer-to-layer space of the inorganic layered compound, and the layer-to-layer space of the inorganic layered compound swells in the solvent. As a result, the inorganic nanosheet is peeled from the inorganic layered compound. The peeled inorganic nanosheet forms a dispersion colloid in the solvent. This dispersion colloid of the inorganic nanosheet can be used as a starting material for the inorganic nanosheet dispersion liquid described later.

In addition, in the case of obtaining the inorganic nanosheet by synthesis, various synthesis methods can be adopted, such as a method of mixing a predetermined salt (for example, carbonate), which is a starting material of the inorganic layered compound, with a metal oxide and firing the mixture, and a method of stirring or refluxing a mixed solution obtained by mixing a raw material (for example, ammonium salts and metal alkoxides) in a predetermined solvent. From the viewpoint of easy control of the particle diameter of the inorganic nanosheet, it is preferable to use a synthesized inorganic nanosheet.

The composition and shape of the inorganic nanosheet are determined depending on the type of inorganic material. That is, the composition of the inorganic nanosheet reflects the composition of the inorganic material (in the case of synthesizing inorganic nanosheet, a material used for synthesis) as the starting material, and the shape of the inorganic nanosheet reflects the crystallographic structure (in the case of synthesizing inorganic nanosheet, the crystallographic structure of an inorganic compound obtained by synthesis) of the inorganic material as the starting material. Therefore, the inorganic nanosheet has, for example, a thickness of several nm (for example, about 1 nm for clay minerals such as fluorohectorite) and a lateral width of about several tens nm or more and several hundred um or less. As a result, the inorganic nanosheet has a shape with extremely large anisotropy (that is, a shape having a significantly high aspect ratio). The lateral width (particle diameter) of the inorganic nanosheet according to the present embodiment is in a range of about several tens nm or more and several hundreds um or less, and various inorganic nanosheets within this range can be used. Herein, the "particle diameter" of the inorganic nanosheet according to the present embodiment is defined as follows.

The "particle diameter" of the inorganic nanosheet is substantially a lateral width of the inorganic nanosheet. When the maximum width of the inorganic nanosheet in plan view is defined as a lateral width, the average value of the lateral widths (for example, the arithmetic mean value) is defined as a "particle diameter" in the present embodiment. The "particle diameter" of the inorganic nanosheet can be measured and calculated by using, for example, a measuring means such as a dynamic light scattering method or an electron microscope. The thickness of the inorganic nanosheet is determined according to the crystal structure of the inorganic material which is a starting material of the inorganic nanosheet.

The inorganic material as the starting material for the inorganic nanosheet is an inorganic layered compound. As the inorganic layered compound, there is used an inorganic layered compound from which an inorganic nanosheet having, on the surface or the peripheral portion, a hydroxyl group (OH group) that is modifiable. Specifically, examples of (1) the inorganic layered compound having, on the surface, a hydroxyl group that is modifiable include layered silicates (kanemite, octosilicate, magadiite, and the like), layered transition metal oxyates (K₄Nb₆O₁₇, Na₂Ti₃O₇, KCaNb₃O₁₀, and the like), and layered phosphates (α-Zr(HPO₄)₃, K₃Sb₃P₂O₁₄, and the like), and examples of (2) the inorganic layered compound having, on the peripheral portion, a hydroxyl group that is modifiable include smectite clay minerals (montmorillonite, vermiculite, saponite, hectorite, and the like) and layered double hydroxides (hydrotalcites and the like).

### (Solvent)

In the inorganic nanosheet dispersion liquid, for example, pure water can be used as a solvent that is a dispersion medium of the inorganic nanosheet.

### (Inorganic nanosheet dispersion liquid)

The inorganic nanosheet dispersion liquid is a dispersion liquid in which the inorganic nanosheet is substantially completely peeled and present in a solvent (that is, it is present as a single body). For example, adding an inorganic nanosheet obtained by a peeling treatment of an inorganic layered compound or a predetermined amount of an inorganic nanosheet obtained by synthesis to a solvent (for example, pure water) can easily prepare an inorganic nanosheet dispersion liquid.

The concentration of the inorganic nanosheet in the inorganic nanosheet dispersion liquid is not particularly limited. If the inorganic nanosheet concentration is several tens wt% or more, the fluidity of the inorganic nanosheet dispersion liquid decreases, and it becomes difficult to perform a treatment such as stirring, but that the inorganic nanosheet is substantially in the state of being completely peeled is maintained.

Herein, the method for evaluating whether or not the inorganic nanosheet is completely in the state of being completely peeled in the inorganic nanosheet dispersion liquid is established can be evaluated using one or more of the following five methods.

### ((a) Observation with atomic force microscope)

The inorganic nanosheet dispersion liquid diluted to a predetermined concentration is cast on a smooth substrate such as mica, dried, and observed. As a result, if a plurality of inorganic nanosheets having substantially the same thickness are observed, and the thickness is the same as a crystallographically expected value, it can be evaluated that the state of being completely peeled is established.

### ((b) Measurement of scattering intensity I with respect to scattering vector q by small-angle X-ray scattering)

In the measurement of the diluted inorganic nanosheet dispersion liquid, if a scattering curve matching the form factor of the inorganic nanosheet (flat plate-shaped particles having a thickness L (nm) expected crystallographically) is obtained by small-angle X-ray scattering measurement, the possibility of complete peeling can be determined to be high. Specifically, if another peak is observed at the position of q = 2n/L and there is a power law of I = q⁻² in the range of q < 2π/L, the possibility of complete peeling can be determined to be high. On the other hand, if the power law in the range of 2 π/L approaches q⁻⁴, the possibility of contamination by aggregates and unpeeled particles can be determined to be high.

### ((c) Transmission electron microscope observation)

If a uniform inorganic nanosheet with low contrast is observed in transmission electron microscope observation, the possibility of a state of complete peeling can be determined to be high. However, the thickness cannot be evaluated by transmission electron microscope observation, and thus there is a possibility of the inorganic nanosheet laminate with the same thickness.

### ((d) Optical microscope observation)

When a coarse particle is not observed in optical microscope observation, the possibility of complete peeling can be determined to be high.

### ((e) Macroscopic cross-nicol observation in inorganic nanosheet dispersion liquid sample (colloidal sample))

If an interference color due to birefringence of the sample is observed and liquid crystallinity is found in macroscopic cross-nicol observation (that is, two polarizing plates are orthogonal to each other, and the sample is sandwiched between the polarizing plates and observed) or polarization microscope observation for an inorganic nanosheet dispersion liquid sample (colloidal sample) having about 1 wt%, the possibility of complete peeling can be determined to be high. In the case of the nanosheet having a diameter of D nm and a thickness of L nm, it is considered that a liquid crystal phase is developed at a volume fraction concentration ϕ = 4.2 L/D or more in the theory of Onsager. For example, in the case of the inorganic nanosheet with D = 1000 nm, L = 1 nm, and density of 2.5 g/cm3, the liquid crystal phase transition concentration is 0.0042 (= 0.42 vol% to 1 wt%). If the inorganic nanosheet is not completely peeled, and, for example, is a laminate of average n layers, the phase transition concentration is n times (about n wt%), and thus the liquid crystal phase is not developed at about 1 wt%.

In the present specification, the "substantially completely peeled" state does not mean that all of the inorganic nanosheets constituting the inorganic layered compound are literally 100% peeled, but means that even in a case where there are some inorganic nanosheets that are not peeled, the birefringence is exhibited in a solution, colloid, or gel state by the evaluation of (e), and/or the possibility of complete peeling is determined to be high by the evaluations of (a) to (d) so that the completely peeled state is observed in terms of the contents and essence.

### [Degradable gel generation step]

In the degradable gel generation step, a monomer, a crosslinking agent, and/or a polymerization initiator are added to the inorganic nanosheet dispersion liquid for gelatinization, thereby generating a degradable gel (a structure made of a degradable gel) in which the completely peeled state of the inorganic nanosheet is fixed by a polymer network. For example, in the degradable gel generation step, a monomer, a crosslinking agent, and a photoradical polymerization initiator are added to the inorganic nanosheet dispersion liquid, and the resulting mixture is irradiated with light for gelatinization, so that a degradable gel is generated.

The "degradable gel" is not particularly limited as long as it is a gel that can be decomposed by applying a predetermined treatment, and examples thereof include a gel that can be decomposed by energy (for example, light or heat), a gel that can be decomposed by addition of a decomposer, and the like.

### (Monomer)

Examples of the monomer include a monomer having an amide group, for example, acid amides. Examples thereof include (meth)acrylamide derivatives. Herein, (meth)acryl represents methacryl or acryl.

### ((Meth)acrylamide derivative)

Examples of the (meth)acrylamide derivative include (meth)acrylamide, N,N-dimethyl(meth)acrylamide, N,N-diethyl(meth)acrylamide, N,N-dipropyl(meth)acrylamide, N,N-dibutyl(meth)acrylamide, N,N-dimethylaminopropyl(meth)acrylamide, N,N-diethylaminopropyl(meth)acrylamide, N,N-dipropylaminopropyl(meth)acrylamide, N-methyl(meth)acrylamide, N-ethyl(meth)acrylamide, N-propyl(meth)acrylamide, N-isopropyl(meth)acrylamide, N-methylol(meth)acrylamide, acryloyl morpholine, and methacryloyl morpholine.

### (Crosslinking agent)

As the crosslinking agent, various compounds can be used as long as the compounds have two or more crosslinkable functional groups and/or one or more polar groups in the molecule.

Examples of the crosslinking agent include diallylamine, N,N'-(1,2-dihydroxyethylene)bisacrylamide, 2,4,8,10-tetraoxaspiro[5.5]undecane, 3,9-divinyl-2,4,8,10-tetraoxaspiro[5.5]undecane, triallylamine, bis(vinylsulfonyl)methane, 1,3-bis(vinylsulfonyl)-2-propanol, 1,3-divinyl-1,1,3,3-tetramethyldisilazane, 1,3-divinyltetramethyl disiloxane, 1,6-bis(acryloyloxy)hexane, N,N'-bis(acryloyl)cystamine, bis(vinylsulfonyl)methane, 1,3-bis(vinylsulfonyl)-2-propanol, N,N'-bis(vinylsulfonylacetyl)ethylenediamine, diallyl adipate, 10-vinyl undecenoate, trans,cis-2,6-nonadienal, divinyl adipate, cis-3-hexenyl cis-3-hexenoate, 2-isopropenyl-5-methyl-5-vinyltetrahydrofuran, (2,7-octadien-1-yl) succinic anhydride, diallyl 1,4-cyclohexanedicarboxylate (cis-,trans-mixture), divinyl glycol, divinyl sulfone, divinyl adipate, divinyl sebacate, diethylene glycol divinyl ether, triethylene glycol divinyl ether, diethylene glycol diacrylate, ethylene glycol diacrylate, 1,4-phenylene bisacrylate, polyethylene glycol diacrylate, N,N'-diacryloylethylenediamine, N,N'-hexamethylenebisacrylamide, N,N'-methylenebisacrylamide, and 1,4-butanediol diacrylate. These crosslinking agents may be used singly or in combination of two or more.

Examples of the crosslinkable functional group include a vinyl group and an acrylic group. Examples of the polar group include an amino group, an imino group, a nitrile group, an ammonium group, an imide group, an amide group, a hydrazo group, an azo group, a diazo group, a sulfide group, a disulfide group, a sulfonyl group, a sulfinyl group, a thiocarbonyl group, a hydroxyl group, a carboxyl group, a carbonyl group, an epoxy group, an oxycarbonyl group, a nitrogen-containing heterocyclic group, an oxygen-containing heterocyclic group, a tin-containing group, and an alkoxysilyl group.

In the present embodiment, regarding the molar ratio between the monomer and the crosslinking agent, it is sufficient that the molar ratio of the monomer is larger than the molar ratio of the crosslinking agent. Specifically, regarding the ratio of the monomer and the crosslinking agent to be added, when the number of moles of the monomer is 100, the number of moles of the crosslinking agent to be added may be 0.1 or more, 0.5 or more, 1 or more, 6 or more, or 10 or more.

### (Polymerization initiator)

As the polymerization initiator, a photoinitiator, a thermal initiator, a redox initiator, or the like can be used according to a method for synthesizing a polymer constituting the degradable gel.

As the photoinitiator, a photoradical generator, a photobase generator, a photoacid generator, or the like can be used. The photoradical generator is a compound that generates radicals by irradiation with an active energy ray such as an ultraviolet ray or an electron beam.

Examples of the photoinitiator include aromatic ketones including thioxanthone and the like, α-aminoalkylphenones, α-hydroxyketones, acylphosphine oxides, oxime esters, aromatic onium salts, organic peroxides, thio compounds, hexaarylbiimidazole compounds, ketoxime ester compounds, borate compounds, azinium compounds, metallocene compounds, active ester compounds, compounds having a carbon halogen bond, and alkylamine compounds. Among them, it is preferable to use at least one initiator selected from the group consisting of an acylphosphine oxide-based polymerization initiator, an α-aminoalkylphenone-based polymerization initiator, an α-hydroxyketone-based polymerization initiator, and an oxime ester-based polymerization initiator.

Examples of the acylphosphine oxide-based polymerization initiator include bis(2,4,6-trimethylbenzoyl)-phenyl-phosphine oxide, bis(2,6-dimethoxybenzoyl)-2,4,4-trimethyl-pentylphenylphosphine oxide, and 2,4,6-trimethylbenzoyl-diphenyl-phosphine oxide. Examples of the α-aminoalkylphenone-based polymerization initiator include 2-methyl-1-(4-methylthiophenyl)-2-morpholinopropane-1-one, 2-benzyl-2-(dimethylamino)-1-(4-morpholinophenyl)-1-butanone, and 2-(dimethylamino)-2-[(4-methylphenyl) methyl]-1-[4-(4-morpholinyl) phenyl]-1-butanone.

Examples of the α-hydroxyketone-based polymerization initiator include 2-hydroxy-1-{4- [4-(2-hydroxy-2-methylpropionyl)-benzyl]-phenyl}-2-methyl-propane-1-one, 2-hydroxy 2-methylpropiophenone, 2-hydroxy-4'-(2-hydroxyethoxy)-2-methylpropiophenone, 1-hydroxy-cyclohexylphenyl-ketone, and oligo{2-hydroxy-2-methyl-1-[4-(1-methylvinyl) phenyl] propanone}.

Examples of the oxime ester-based polymerization initiator include 1.2-octanedione, 1-[4-(phenylthio)-,2-(O-benzoyloxime)], ethanone, 1-[9-ethyl-6-(2-methylbenzoyl)-9H-carbazol-3-yl]-,1-(o-acetyloxime), methanone, ethanone, and 1-[9-ethyl-6-(1,3 dioxolane,4-(2-methoxyphenoxy)-9H-carbazol-3-yl]-,1-(o-acetyloxime).

Examples of the thermal initiator include organic peroxides such as benzoyl peroxide, t-butyl perbenzoate, and cumene hydroperoxide, and azo compounds such as 2,2'-azobisisobutyronitrile, 2,2'-azobis-(2-methylbutyronitrile), and 2,2'-azobis(2,4-dimethylvaleronitrile).

Examples of the redox initiator include: a combination of a persulfate initiator and a reducing agent (sodium bisulfite, sodium bisulfite, thiourea compound, and the like); a combination of an organic peroxide and a tertiary amine (for example, a combination of benzoyl peroxide and dimethylaniline, a combination of cumene hydroperoxide and anilines, and the like); and a combination of an organic peroxide and a transition metal.

In the present embodiment, the initiator is preferably added in an amount of 0.001 mol or more, more preferably in an amount of 0.02 mol or more, and preferably in an amount of 0.05 mol or less, more preferably in an amount of 0.03 mol or less, with respect to 1 mol of the monomer.

### [Solvent substitution step]

The solvent substitution step is a step of adding a predetermined solvent to the degradable gel obtained in the degradable gel generation step of performing solvent substitution. In the solvent substitution step, the solvent used for the degradable gel (solvent contained in the degradable gel) is substituted with an appropriate solvent according to the compound used for modification in the modification step described later. In the solvent substitution step, according to the compound to be used for modification, the solvent may be substituted with a solvent in which conditions such as pH are adjusted. Therefore, depending on the compound used for modification, the solvent need not be substituted, and in this case, the solvent substitution step can be omitted. In the present embodiment, it is preferable that the solvent of the degradable gel is water from the viewpoint of ease of handling, and in the case of modifying the inorganic nanosheet in this case, it is preferable that water is substituted with a predetermined organic solvent in the solvent substitution step.

Herein, adding a predetermined solvent to the degradable gel causes the solvent of the degradable gel to move out of the gel. Therefore, in the solvent substitution step, the solvent in the degradable gel is substituted with a predetermined solvent by repeating a solvent substitution operation of adding a predetermined solvent to the degradable gel.

If the degradable gel is not used and a solution in which the inorganic nanosheets are dispersed is used, a step of evaporating the solvent from the solution, a filtration step, and the like are required to exchange the solvent. In this case, the inorganic nanosheets are aggregated, and a completely peeled state cannot be maintained. In addition, in the case of exchanging with a solvent having low affinity with the inorganic nanosheet, the inorganic nanosheets are aggregated. In addition, if the conditions of pH and salt concentration are not appropriate, the inorganic nanosheets are aggregated. Therefore, from the viewpoint of maintaining the completely peeled state of the inorganic nanosheet, it is most preferable to use the degradable gel according to the present embodiment.

### (Solvent)

Examples of the solvent used for the solvent substitution step include organic solvents. Examples of the organic solvent include hydrocarbons that are liquid at room temperature and have about 1 to 12 carbon atoms, halogenated hydrocarbons, ketones, ethers, esters, N,N-disubstituted amides, nitriles, and tertiary amines. Examples of the organic solvent include hexane, cyclohexane, chloroform, benzene, toluene, xylene, acetone, diethyl ketone, methyl ethyl ketone, methyl isobutyl ketone, diethyl ether, diisobutyl ether, tetrahydrofuran, dioxane, methyl acetate, ethyl acetate, N,N-dimethylformamide, acetonitrile, pyridine, triethylamine, and dimethyl sulfoxide. These solvents may be used singly, or a plurality of these solvents may be mixed.

### [Modification step]

A modification step is a step of adding a modifier to the degradable gel or the degradable gel after solvent substitution, and modifying the inorganic nanosheet with the modifier. The modifier enters the degradable gel and reacts with hydroxyl groups on the inorganic nanosheet surface to modify the inorganic nanosheet. After the modification step, the degradable gel after the modification step may be immersed in a predetermined solvent (for example, a solvent used for solvent substitution) to remove the unreacted modifier on the surface of the degradable gel and inside the degradable gel.

Examples of the modifier include silylating agents, organic phosphonic acids, and alcohols. As the solvent used for the solvent substitution step, a solvent according to the type of these modifiers can be selected.

### (Silylating agent)

As the silylating agent, various silylating agents can be used as long as they are silylating agents that cause dehydration condensation between the silanol group generated by hydrolysis of the alkoxy group of the silylating agent and the hydroxyl group on the inorganic nanosheet surface. Examples of the silylating agent include chlorodimethylisopropylsilane, chlorodimethylbutylsilane, chlorodimethyloctylsilane, chlorodimethyldodecylsilane, chlorodimethyloctadecylsilane, chlorodimethylphenylsilane, chloro(1-hexenyl)dimethylsilane, dichlorohexylmethylsilane, dichloroheptylmethylsilane, trichlorooctylsilane, hexamethyldisilazane, 1,3-divinyl-1,1,3,3-tetramethyldisilazane, 1,3-divinyl-1,3-diphenyl-1,3-dimethyl-disilazane, 1,3-N-dioctyltetramethyl-disilazane, diisobutyltetramethyldisilazane, diethyltetramethyldisilazane, N-dipropyltetramethyldisilazane, N-dibutyltetramethyldisilazane or 1,3-di(para-t-butylphenethyl)tetramethyldisilazane, N-trimethylsilylacetamide, N-methyldiphenylsilylacetamide, N-triethylsilylacetamide, t-butyldiphenylmethoxysilane, methoxy(dimethyl)octadecylsilane, dimethyloctylmethoxysilane, octylmethyldimethoxysilane, octyltrimethoxysilane, trimethylethoxysilane, and octyltriethoxysilane.

As the silylating agent, 3-mercaptopropyl(dimethoxy)dimethylsilane, (3-mercaptopropyl)trimethoxysilane, (3-isocyanatopropyl)triethoxysilane, 3-ureidopropyl trialkoxysilane, 8-glycidoxyoctyltrimethoxysilane, or the like can also be used.

Among them, hexamethyldisilazane, methoxy(dimethyl)octadecylsilane, dimethyloctylmethoxysilane, trimethylethoxysilane, 3-mercaptopropyl(dimethoxy)dimethylsilane, and the like are preferably used from the viewpoint of reactivity, stability, and the like. However, a silylating agent different from these can also be used according to the purpose of modifying the inorganic nanosheet surface.

### (Organic phosphonic acid)

Examples of the organic phosphonic acid include methylphosphonic acid, ethylphosphonic acid, t-butylphosphonic acid, cyclohexylphosphonic acid, and phenylphosphonic acid.

### (Alcohol)

Examples of the alcohol include: monoalcohols such as methanol, ethanol, 1-propanol, 2-propanol, butanol, octanol, n-decanol, lauryl alcohol, and stearyl alcohol; diols such as ethylene glycol, propylene glycol, and diethylene glycol; triols such as glycerin and trimethylolpropane; and tetraols such as pentaerythritol. The alcohol may be a polyol having five or more hydroxyl groups in one molecule.

### [Gel removal step]

A gel removal step is a step of decomposing and removing the polymer network of the degradable gel after modifying the inorganic nanosheet surface. Specifically, the gel removal step is a step of adding the degradable gel to at least one selected from the group consisting of a predetermined acid and water, and decomposing the degradable gel to remove the degradable gel. For example, the degradable gel can be decomposed by stirring the modified degradable gel in a predetermined acid at a predetermined temperature for a predetermined time. The degradable gel can also be decomposed by putting the modified degradable gel and water in a pressure-resistant container and heating at a predetermined temperature for a predetermined time. In the present embodiment, it is preferable to decompose the degradable gel using water from the viewpoint of preventing aggregation and the like of the inorganic nanosheets after decomposing the degradable gel. Then, after the degradable gel is decomposed, by removing the decomposition product by, for example, a method such as filtration, it is possible to recover the modification inorganic nanosheet dispersion colloid modified with the modifier. Thereafter, drying may be performed to recover the modification inorganic nanosheet modified with the modifier.

### [Application fields]

The modification inorganic nanosheet (for example, silylated inorganic nanosheet) according to the present embodiment can be applied in various ways according to the chemical species to be modified. When the surface is modified with a long-chain alkyl group or a polymer chain, dispersibility in a hydrophobic solvent is improved, which makes it possible to be used as a nanocomposite material that is combined with many types of polymer materials used industrially, and to provide a structure material of a fuel efficient automobile, aircraft, or the like as a plastic, rubber, or the like having light weight, high mechanical strength, gas barrier properties, fire resistance, heat resistance, and insulation properties. In addition, application is possible to various fields including adsorption/separation, sensors, catalysts, and electrode materials. In particular, application is easy to a material requiring control of physical properties such as mechanical strength and heat resistance, such as a composite material with a hydrophobic polymer.

### <Effects of embodiment>

In the method for producing a modification inorganic nanosheet according to the present embodiment, the substantially completely peeled inorganic nanosheet is fixed in the degradable gel to prevent aggregation of the inorganic nanosheets, and a modifier is added thereto to modify the inorganic nanosheet, and then the degradable gel is decomposed and removed. Thus, according to the method for producing a modification inorganic nanosheet according to the present embodiment, unlike the inorganic nanosheet obtained by the conventional method of intercalating an inorganic layered compound with an organic ammonium salt or the like to expand the layer-to-layer space, then performing modification, and peeling the modified layer, there can be obtained an inorganic nanosheet in which the surface (that is, the front surface or the back surface) of each sheet is uniformly modified with a modifier. Therefore, the method for producing a modification inorganic nanosheet according to the present embodiment can increase not only the modification rate of the modifier for the inorganic nanosheet, but also can increase the recovery rate of the modification inorganic nanosheet with a single layer peeled.

In addition, in the method for producing a modification inorganic nanosheet according to the present embodiment, the inorganic nanosheet in the state of being completely peeled is fixed with the degradable gel, and a modifier is introduced into the degradable gel to modify the inorganic nanosheet, so that the degree of freedom of selection of the modifier can be improved and the control and the like of the modification rate by the modifier can be facilitated. The type of the degradable gel for fixing the inorganic nanosheet and the type of the solvent used for solvent substitution can also be appropriately selected according to the type of the modifier, and thus, it is easy to design what type of properties is exhibited by modifying the inorganic nanosheet.

Furthermore, the method for producing a modification inorganic nanosheet according to the present embodiment can modify each inorganic nanosheet (for example, silylation), and thus can suppress aggregation of the inorganic nanosheets in a solvent, and can substantially uniformly disperse the inorganic nanosheets in a hydrophobic organic polymer. Thus, the modification inorganic nanosheet according to the present embodiment can easily achieve formation of a composite of an inorganic nanosheet with an organic polymer, and application to adsorption and separation, a sensor, and a smart colloid.

### Examples

Hereinafter, the method for producing a modification inorganic nanosheet and the modification inorganic nanosheet according to the present embodiment are specifically described using Examples. In Examples, examples of silylation are described as modification.

### [Synthesis of hexaniobate nanosheet]

First, potassium carbonate (manufactured by FUJIFILM Wako Pure Chemical Corporation, molecular formula: K₂CO₃, molecular weight: 138.20) and niobium oxide (manufactured by FUJIFILM Wako Pure Chemical Corporation, molecular formula: Nb₂O₅, molecular weight: 265.81) were dried at 120°C for 1 day. Then, potassium carbonate and niobium oxide were mixed under acetone wetting, and then dried at room temperature (23°C) to prepare a mixed sample. The molar ratio between potassium carbonate and niobium oxide used was 1.1 : 1.25. Subsequently, the mixed sample was fired in the air at 1150°C for 10 hours. Thereby, a hexaniobate (K₄Nb₆O₁₇) single crystal was obtained.

The obtained hexaniobate single crystal was measured with an X-ray scattering apparatus, and a peak attributed to K₄Nb₆O₁₇·3H₂O was observed, and thus it was confirmed that a K₄Nb₆O₁₇ single crystal was synthesized. Herein, for structural analysis using an X-ray diffractometer, Shimadzu XRD-7000L (CuKα, 30 V, 40 mA) was used. The powder obtained by drying the synthesized sample was placed in a glass sample holder having a depth of 1 mm, and the measurement was performed.

Then, the obtained hexaniobate single crystal was added to an aqueous solution of propylammonium chloride (manufactured by Tokyo Chemical Industry Co., Ltd., molecular formula: C₃H₉N·HCl, molecular weight: 95.57). Herein, the molar ratio of C₃H₇NH₂·HCl : K⁺ was adjusted to 3 : 1. Then, this solution was stored at 80°C for 7 days to peel and disperse K₄Nb₆O₁₇ in the solution (hereinafter, this solution is referred to as "dispersion solution"). Subsequently, the dispersion solution was centrifuged (CF-15RXII manufactured by HITACHI, Ltd., centrifugal separation conditions: 20°C, 11000 rpm, 15 minutes). After centrifugation, the supernatant was discarded, and pure water was added and stirred. The operation of centrifugation, discard of the supernatant, and addition of pure water were repeated three times. Then, pure water was added to the obtained precipitate and the resultant product was dialyzed. In dialysis, pure water was replaced 5 times every 5 hours, and then replaced 2 times every 24 hours. Thereby, a hexaniobate nanosheet according to Example was obtained.

### [Synthesis of degradable gel]

Pure water was added to the hexaniobate nanosheet according to Example to prepare 3 wt% hexaniobate nanosheet-water colloid (hereinafter, may be referred to as "inorganic nanosheet dispersion liquid"). When this inorganic nanosheet dispersion liquid was subjected to cross-nicol observation, birefringence was observed. Therefore, a state in which the inorganic nanosheet was substantially completely peeled was confirmed. For the cross-nicol observation, a polarization microscope (OLYMPUS BX51) was used.

### (Examples 1 and 2)

First, to an inorganic nanosheet dispersion liquid, there were added 6.44 × 10⁻³ mol of N,N-dimethylacrylamide (DMAA, manufactured by Tokyo Chemical Industry Co., Ltd., molecular formula: C₅H₉NO, molecular weight: 99.13) as a monomer, 1.93 × 10⁻⁴ mol of 3,9-divinyl-2,4,8,10-tetraoxospiro[5.5]undecane (DVTO, manufactured by Tokyo Chemical Industry Co., Ltd., molecular formula: C₁₁H₁₆O₄, molecular weight: 212.24) as a crosslinking agent, and 1.64 × 10⁻⁴ mol of 2-hydroxy-4'-(2-hydroxyethoxy)-2-methylpropiophenone (manufactured by Tokyo Chemical Industry Co., Ltd., molecular formula: C₁₂H₁₆O₄, molecular weight: 224.26) as a photoradical polymerization initiator, and the mixture was stirred. The molar ratio of monomer : crosslinking agent was set to 100 : 3. Thereafter, an inorganic nanosheet-pDMAA degradable gel was synthesized by ultraviolet irradiation (peak wavelength: 352 nm, radiation intensity: 13 µW/cm²) using blacklight 10 W FL10BLB manufactured by Toshiba Corporation. After the synthesis, water in the degradable gel was substituted with N,N-dimethylformamide (DMF, manufactured by FUJIFILM Wako Pure Chemical Corporation, molecular formula: C₃H₇NO, molecular weight: 73.10).

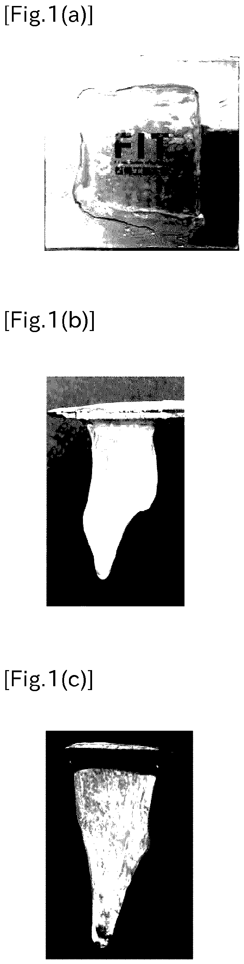

Fig. 1(a) illustrates the observation result of transparency of the inorganic nanosheet-pDMAA degradable gel after solvent substitution, and Fig. 1(b) illustrates the visual observation result of the inorganic nanosheet-pDMAA degradable gel after solvent substitution. In addition, Fig. 1(c) illustrates the result of cross-nicol observation of the inorganic nanosheet-pDMAA degradable gel after solvent substitution.

As found with reference to Fig. 1(a), the inorganic nanosheet-pDMAA degradable gel after solvent substitution had transparency. As found with reference to Fig. 1(b), the inorganic nanosheet-pDMAA degradable gel after solvent substitution had a strength enough to be lifted with at least tweezers. Furthermore, as illustrated in Fig. 1(c), birefringence was observed in the inorganic nanosheet-pDMAA degradable gel after solvent substitution by cross-nicol observation.

Therefore, birefringence was observed in the inorganic nanosheet-pDMAA degradable gel, indicating that the inorganic nanosheet was substantially completely peeled and the inorganic nanosheet in the liquid crystal state was fixed in the degradable gel.

### [Silylation of inorganic nanosheet surface fixed in degradable gel]

To 30.0 mL of DMF, there were added an inorganic nanosheet-pDMAA degradable gel (volume: 0.9 mL) after solvent substitution and 1.88 × 10⁻⁴ mol of methoxy(dimethyl)octadecylsilane (manufactured by Tokyo Chemical Industry Co., Ltd., molecular formula: C₂₁H₄₆OSi, molecular weight: 342.68) or 3-mercaptopropyl(dimethoxy)dimethylsilane (manufactured by Tokyo Chemical Industry Co., Ltd., molecular formula: C₆H₁₆O₂SSi, molecular weight: 180.34) as a silylating agent, and the mixture was reacted at 60°C for 1 week under a nitrogen atmosphere. Thus, the silylated inorganic nanosheet-pDMAA degradable gel was synthesized. That is, the silylated inorganic nanosheet-pDMAA degradable gel modified with methoxy(dimethyl)octadecylsilane (Example 1) and the silylated inorganic nanosheet-pDMAA degradable gel modified with 3-mercaptopropyl(dimethoxy)dimethylsilane (Example 2) were synthesized.

### [Decomposition of degradable gel and recovery of silylated inorganic nanosheet]

Each of the silylated inorganic nanosheet-pDMAA degradable gels according to Example 1 and Example 2 obtained by synthesis was immersed in DMF to remove an unreacted silylating agent. Thereafter, the degradable gel was decomposed by the following decomposition method to obtain a sample.

A method in which the silylated inorganic nanosheet-pDMAA degradable gel is charged together with 30 mL of water into a pressure-resistant container, and thermally decomposed at 200°C for 1 day (water decomposition method).

Each of the samples obtained by decomposing the silylated inorganic nanosheet-pDMAA degradable gel according to Example 1 and Example 2 was washed with acetone and chloroform, and the decomposed polymer and DMF were removed. Thereafter, the silylated inorganic nanosheets according to Example 1 and Example 2 were recovered, and the recovered silylated inorganic nanosheets according to Example 1 and Example 2 were dried to be made into a powder, and FT-IR measurement was performed for each of the silylated inorganic nanosheets. For the FT-IR measurement, a Fourier infrared spectrophotometer (FT-IR) Cary670 manufactured by Agilent Technologies Inc. was used. The measurement conditions are the KBr method.

### [IR spectral analysis of recovered silylated inorganic nanosheet]

First, a peak derived from an inorganic nanosheet, a peak derived from a counter cation, and a peak derived from a silylating agent were observed in the IR spectra of each of the silylated inorganic nanosheets recovered after the silylated inorganic nanosheet-pDMAA degradable gels according to Example 1 and Example 2 were decomposed by the water decomposition method. Specifically, Nb-O stretching vibration (920 cm⁻¹) derived from an inorganic nanosheet, C-N stretching vibration (1160 cm⁻¹) derived from propylammonium as a counter cation, and H-N-H bending vibration (1504 cm⁻¹) of NH₃⁺ of a primary amine salt, Si-C bending vibration (1200 cm⁻¹) derived from a silyl group, C-H stretching vibration (2853 cm⁻¹ and 2926 cm⁻¹) of a methylene group, and C-H stretching vibration (2962 cm⁻¹) of a methyl group were observed in each of Example 1 and Example 2.

Therefore, it has been shown that a sufficient amount of the silylating agent was modified in each of the inorganic nanosheets fixed in the silylated inorganic nanosheet-pDMAA degradable gels according to Example 1 and Example 2.

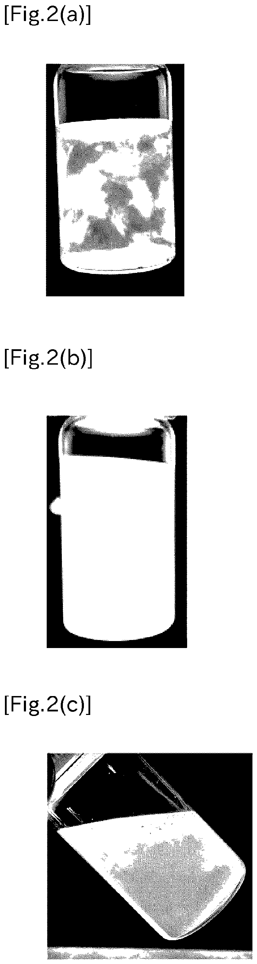

Fig. 2(a) illustrates the result of the cross-nicol observation of the comparative sample, Fig. 2(b) illustrates the cross-nicol observation of the sample according to Example 1 using methoxy(dimethyl)octadecylsilane, and Fig. 2(c) illustrates the cross-nicol observation of the sample according to Example 2 using 3-mercaptopropyl(dimethoxy)dimethylsilane.

First, for the inorganic nanosheet-pDMAA degradable gel before silylation, there was prepared a comparative sample of decomposing the degradable gel by the water decomposition method. As a result of the cross-nicol observation of this comparative sample, as illustrated in Fig. 2(a), birefringence was observed. That is, it has been shown that the degradable gel was decomposed to obtain the original inorganic nanosheet dispersion liquid.

On the other hand, as a result of the cross-nicol observation of a sample obtained by decomposing the silylated inorganic nanosheet-pDMAA degradable gel according to Example 1 using methoxy(dimethyl)octadecylsilane by the water decomposition method, no birefringence was observed as illustrated in Fig. 2(b). In addition, the sample had turbidity, and a precipitate was generated when the sample was allowed to stand (that is, the silylated inorganic nanosheets were not dispersed in water). Therefore, in the silylated inorganic nanosheet obtained by decomposing the gel of the silylated inorganic nanosheet-pDMAA degradable gel according to Example 1, it has been shown that the inorganic nanosheet surface was silylated to be hydrophobic, and dispersibility in water was reduced.

Furthermore, as a result of the cross-nicol observation of the sample obtained by decomposing the silylated inorganic nanosheet-pDMAA degradable gel according to Example 2 using 3-mercaptopropyl(dimethoxy)dimethylsilane by the water decomposition method, flow birefringence was observed as illustrated in Fig. 2(c). In addition, the sample was a slightly turbid liquid similar to the comparative sample under white light, and no precipitate was generated even when the sample was allowed to stand (that is, the silylated inorganic nanosheets were dispersed in water). Therefore, in the silylated inorganic nanosheet obtained by decomposing the gel of the silylated inorganic nanosheet-pDMAA degradable gel modified with 3-mercaptopropyl(dimethoxy)dimethylsilane, it has been shown that even after the inorganic nanosheet surface was silylated, hydrophilicity was maintained by the mercapto group, and dispersibility in water was maintained. As described above, it has been shown that in Example 1 and Example 2, the silylated inorganic nanosheet substantially in the state of being completely peeled was obtained.

### (Example 3)

Pure water was added to the hexaniobate nanosheet according to Examples to prepare 3 wt% hexaniobate nanosheet-water colloid (inorganic nanosheet dispersion liquid), and then, to this inorganic nanosheet dispersion liquid, there were added and stirred 6.44 × 10⁻³ mol of acrylic acid (AA, manufactured by Tokyo Chemical Industry Co., Ltd., molecular formula: C₃H₅O₂, molecular weight: 72.06) as a monomer, 6.44 × 10⁻⁴ mol of 3,9-divinyl-2,4,8,10-tetraoxospiro[5.5]undecane (DVTO, manufactured by Tokyo Chemical Industry Co., Ltd., molecular formula: C₁₁H₁₆O₄, molecular weight: 212.24) as a crosslinking agent, and 5.47 × 10⁻⁴ mol of 2-hydroxy-4'-(2-hydroxyethoxy)-2-methylpropiophenone (manufactured by Tokyo Chemical Industry Co., Ltd., molecular formula: C₁₂H₁₆O₄, molecular weight: 224.26) as a photoradical polymerization initiator. The molar ratio of monomer : crosslinking agent was set to 100 : 10. Thereafter, an inorganic nanosheet-pAA degradable gel was synthesized by ultraviolet irradiation (peak wavelength: 352 nm, radiation intensity: 13 µW/cm²) using blacklight 10 W FL10BLB manufactured by Toshiba Corporation. Then, after the synthesis, the degradable gel was immersed in a 0.01 M hydrochloric acid aqueous solution and allowed to stand at room temperature for 5 days to exchange propylammonium, which was a counter cation of the inorganic nanosheet, with a proton. During this time, the hydrochloric acid aqueous solution was replaced every day. Thereafter, water in the degradable gel was substituted with N,N-dimethylformamide (DMF, manufactured by FUJIFILM Wako Pure Chemical Corporation, molecular formula: C₃H₇NO, molecular weight: 73.10).

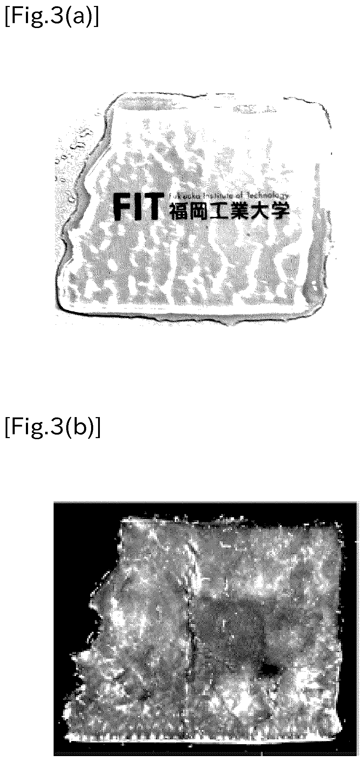

Fig. 3(a) illustrates the result of visual observation of the inorganic nanosheet-pAA degradable gel after solvent substitution. In addition, Fig. 3(b) illustrates the result of cross-nicol observation of the inorganic nanosheet-pAA degradable gel after solvent substitution.

As found with reference to Fig. 3(a), the inorganic nanosheet-pAA degradable gel after solvent substitution had transparency. Furthermore, as illustrated in Fig. 3(b), birefringence was observed in the inorganic nanosheet-pAA degradable gel after solvent substitution by cross-nicol observation.

Therefore, birefringence was observed in the inorganic nanosheet-pAA degradable gel, indicating that the inorganic nanosheet was substantially completely peeled and the inorganic nanosheet in the liquid crystal state was fixed in the degradable gel.

### [Silylation of inorganic nanosheet surface fixed in degradable gel]

To 30.0 mL of DMF, there were added an inorganic nanosheet-pAA degradable gel (volume: 0.9 mL) after solvent substitution and 3-mercaptopropyl(dimethoxy)dimethylsilane (manufactured by Tokyo Chemical Industry Co., Ltd., molecular formula: C₆H₁₆O₂SSi, molecular weight: 180.34) as a silylating agent, and the mixture was reacted at 100°C for 1 week under a nitrogen atmosphere. Thus, the silylated inorganic nanosheet-pAA degradable gel was synthesized. That is, a silylated inorganic nanosheet-pAA degradable gel modified with 3-mercaptopropyl(dimethoxy)dimethylsilane (Example 3) was synthesized.

### [Decomposition of degradable gel and recovery of silylated inorganic nanosheet]

The silylated inorganic nanosheet-pAA degradable gel according to Example 3 obtained by synthesis was immersed (room temperature, 1 day) in DMF, and then immersed (room temperature, 1 day) in pure water to remove an unreacted silylating agent. Thereafter, the degradable gel was decomposed by the following decomposition method to obtain a sample.

A method in which the silylated inorganic nanosheet-pAA degradable gel is charged together with 100 mL of water into a pressure-resistant container, and thermally decomposed at 140°C for 8 hours (water decomposition method).

The samples obtained by decomposing the silylated inorganic nanosheet-pAA degradable gel according to Example 3 was washed with water, and the decomposed polymer and DMF were removed. Thereafter, the silylated inorganic nanosheet according to Example 3 was recovered, and the recovered silylated inorganic nanosheet according to Example 3 was dried to be made into a powder, and FT-IR measurement was performed. For the FT-IR measurement, a Fourier infrared spectrophotometer (FT-IR) Cary670 manufactured by Agilent Technologies Inc. was used. The measurement conditions are the KBr method. In addition, a powder sample was dissolved using an aqueous hydrofluoric acid solution, and the composition was analyzed by inductively coupled plasma (ICP) emission spectrometry.

### [IR spectral analysis of recovered silylated inorganic nanosheet]

First, a peak derived from an inorganic nanosheet, a peak derived from a counter cation, and a peak derived from a silylating agent were observed in the IR spectrum of the silylated inorganic nanosheet recovered after the silylated inorganic nanosheet-pAA degradable gel according to Example 3 was decomposed by the water decomposition method. Specifically, Nb-O stretching vibration (920 cm⁻¹) derived from an inorganic nanosheet, C-N stretching vibration (1160 cm⁻¹) derived from propylammonium as a counter cation, and H-N-H bending vibration (1504 cm⁻¹) of NH₃⁺ of a primary amine salt, Si-C bending vibration (1200 cm⁻¹) derived from a silyl group, Si-O-Si stretching vibration (1085 cm⁻¹), Si-O-Nb stretching vibration (1015 cm⁻¹), C-H stretching vibration (2853 cm⁻¹ and 2926 cm⁻¹) of a methylene group, and C-H stretching vibration (2962 cm⁻¹) of a methyl group were observed.

Furthermore, as a result of composition analysis by ICP, it has been found that 0.38 molecules of the silylating agent were bonded to the Nb₆O₁₇ unit of the inorganic nanosheet with the Si/Nb ratio being 0.064. This modification amount corresponds to the silylation of 38% of the surface OH group that is modifiable.

Therefore, it has been shown that a sufficient amount of the silylating agent was modified in the inorganic nanosheet fixed in the silylated inorganic nanosheet-pAA degradable gel according to Example 3.

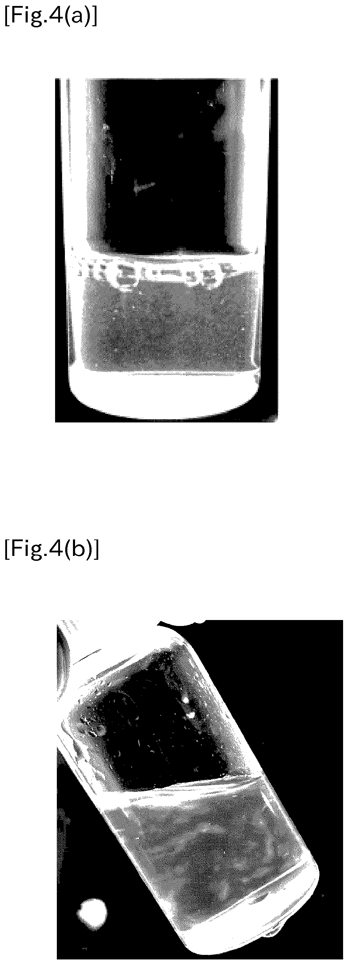

Fig. 4(a) illustrates the result of the cross-nicol observation of the comparative sample, and Fig. 4(b) illustrates the result of the cross-nicol observation of the sample according to Example 3 using 3-mercaptopropyl(dimethoxy)dimethylsilane.

First, for a proton-exchanged inorganic nanosheet-pAA degradable gel before silylation, there was prepared a comparative sample in which the degradable gel was decomposed by the water decomposition method. As a result of the cross-nicol observation of this comparative sample, as illustrated in Fig. 4(a), an aggregate having a visible size was observed, and no birefringence was observed. That is, it has been shown that although the degradable gel was decomposed, the dispersion state could not be maintained because propylammonium as a peeling agent was substituted with protons, and the inorganic nanosheets were aggregated.

On the other hand, as a result of the cross-nicol observation of the sample obtained by decomposing the silylated inorganic nanosheet-pAA degradable gel according to Example 3 using 3-mercaptopropyl(dimethoxy)dimethylsilane by the water decomposition method, flow birefringence was observed as illustrated in Fig. 4(b). In addition, the sample was a slightly turbid liquid similar to the comparative sample under white light, and no precipitate was generated even when the sample was allowed to stand (that is, the silylated inorganic nanosheets were dispersed in water). Therefore, in the silylated inorganic nanosheet obtained by decomposing the gel of the silylated inorganic nanosheet-pAA degradable gel modified with 3-mercaptopropyl(dimethoxy)dimethylsilane, it has been shown that even after the peeling agent was removed and the inorganic nanosheet surface was silylated, hydrophilicity was maintained by the mercapto group, and dispersibility in water was maintained. As described above, it has been shown that in Example 3, the silylated inorganic nanosheet substantially in the state of being completely peeled was obtained.

The embodiments and examples of the present invention have been described above, and the embodiments and examples described above do not limit the invention according to claims. In addition, it should be noted that not all combinations of features described in the embodiments and examples are essential for means for solving the problems to be solved by the invention.

## Claims

1. A method for producing a modification inorganic nanosheet, the method comprising:
a degradable gel generation step of polymerizing a monomer using a polymerization initiator in an inorganic nanosheet dispersion liquid containing an inorganic nanosheet and water to generate a degradable gel from the monomer;
a modification step of adding a modifier to the degradable gel and modifying the inorganic nanosheet with the modifier; and
a gel removal step of removing the degradable gel.

2. The method for producing a modification inorganic nanosheet according to claim 1, wherein the inorganic nanosheet dispersion liquid is formed by containing inorganic nanosheets that is substantially completely peeled.

3. The method for producing a modification inorganic nanosheet according to claim 1 or 2, wherein the inorganic nanosheet has, on the surface or the peripheral portion, a hydroxyl group that is modifiable.

4. The method for producing a modification inorganic nanosheet according to claim 1, the method further comprising a solvent substitution step of substituting a solvent by adding a predetermined solvent after the degradable gel generation step.

5. The method for producing a modification inorganic nanosheet according to claim 1, wherein in the gel removal step, the degradable gel is added to water to decompose the degradable gel, and the degradable gel is removed.

6. The method for producing a modification inorganic nanosheet according to claim 1, wherein
the monomer is an acid amide, and
the degradable gel generation step further includes a crosslinking agent.

7. A structure comprising a degradable gel, the degradable gel containing an inorganic nanosheet substantially in a completely peeled state, an organic solvent, and a modifier, and fixing the completely peeled state of the inorganic nanosheet.

8. A structure comprising a degradable gel, the degradable gel containing an inorganic nanosheet substantially in a completely peeled state and a modifier, and fixing a completely peeled state of an inorganic nanosheet modified with the modifier.
